# EUROPEAN PATENT APPLICATION

(11) **EP 4 603 973 A1**
(43) Date of publication of application: **20.08.2025**
(21) Application number: 23887637.9
(22) Date of filing: 11.09.2023
(51) Int. Cl.: G06F 9/50

(54) **RESOURCE CONFIGURATION METHOD, SERVER CLUSTER AND SERVER NODE**

(30) Priority: 10.11.2022 CN 202211403920
(71) Applicant: xFusion Digital Technologies Co., Ltd., Zhengzhou, Henan 450046 (CN)
(72) Inventor: FAN, Guokui, Zhengzhou, Henan 450046 (CN)
(74) Representative: MERH-IP Matias Erny Reichl Hoffmann Patentanwälte PartG mbB
(86) International application number: PCT/CN2023/118100
(87) International publication number: WO 2024/098943

(57) **Abstract**

The present application relates to a resource configuration method, a server cluster, and a server node, involving the technical field of resource configuration. In the present application, a management node first receives a resource configuration request that is used to request expansion of resources of a first POD and then creates a second POD at a computing node; then sends a resource adjustment instruction to the computing node, where the resource adjustment instruction is used to direct that at least partial resources of the second POD be allocated to the first POD. In response to the resource adjustment instruction, the computing node allocates the at least partial resources of the second POD to the first POD. By means of the method provided in the present application, the second POD is created at the computing node where the first POD is arranged, and the resources of the second POD are allocated to the first POD, such that dynamic expansion of the resources of the first POD can be realized. Consequently, there is no need to delete or recreate the first POD during resource expansion, avoiding an interruption to a service running in the first POD.

## Description

This application claims priority to Chinese Patent Application No. 202211403920.9, filed with China National Intellectual Property Administration on November 10, 2022 and entitled "RESOURCE CONFIGURATION METHOD, SERVER CLUSTER, AND SERVER NODE", which is incorporated herein by reference in its entirety.

### TECHNICAL FIELD

The present application relates to the field of resource configuration technologies, in particular to a resource configuration method, a server cluster, and a server node.

### BACKGROUND

Kubernetes (K8s) is an open-source application program. K8S includes a control end (master) and a node end (node). The master end is used to manage one or a plurality of management units (PODs) arranged on the node end, where each POD is configured with different resources to run different services, thereby achieving different functions.

In the process of using Kubernetes, users need to reconfigure resources of a created POD (such as a POD 1) based on a service requirement. In related technologies, when users need to reconfigure the number of resources of the POD 1, they need to delete the POD 1 and create a new POD 2 based on a latest resource requirement of a service, and then run the service that was running in the POD 1 in the newly created POD 2. This process will result in an interruption to the service running in the POD 1, affecting user experience.

### SUMMARY

Embodiments of the present application provide a resource configuration method, a server cluster, and a server node for resolving a technical problem that a management unit needs to be restarted during a resource configuration process, which will result in a service interruption.

To achieve this objective, the embodiments of the present application adopt the following technical solutions:
In a first aspect, the resource configuration method is provided, applicable to the server cluster. The server cluster includes a management node and a computing node, where one or a plurality of management units (PODs) are arranged on the computing node. The method includes: receiving, by the management node, a resource configuration request, where the resource configuration request is configured to request expansion of resources of a first POD and the first POD is any POD arranged on the computing node; based on the resource configuration request, creating a second POD on the computing node and associating the first POD with the second POD by the management node; sending, by the management node, a resource adjustment instruction to the computing node, where the resource adjustment instruction is configured to direct allocation of at least partial resources of the second POD to the first POD; and in response to the resource adjustment instruction, allocating, by the computing node, the at least partial resources of the second POD to the first POD. When receiving a user's request to expand the resources of the first POD, the method provided by the present application creates a second POD in the computing node where the first POD is arranged, and allocates the resources of the second POD to the first POD, such that dynamic expansion of the resources of the first POD is realized. Consequently, there is no need to delete or recreate the first POD during resource expansion, avoiding the interruption to a service running in the first POD and enhancing the user's experience.

In one possible implementation of the first aspect, the management node sends the resource adjustment instruction to the computing node, including: after receiving a message sent by the computing node indicating that creation of the second POD is completed, sending resource adjustment instruction to the computing node. The method provided in the present application, by sending a resource scheduling instruction to the computing node when the creation of the second POD is completed, can avoid that the management node directs the computing node to allocate resources of the second POD to the first POD when the creation of the second POD in the computing node has not been completed, making the computing node fail to allocate the resources to the first POD, resulting in a resource configuration failure and affecting the user experience.

In one possible implementation of the first aspect, the method further includes: receiving, by the management node, a POD deletion request entered by the user, where the POD deletion request is configured to request deletion of the first POD; and in response to the POD deletion request, deleting the first POD and any POD associated with the first POD via the management node. The method provided in the present application, upon receiving a user's request for deletion of the first POD, deletes all the PODs associated with the first POD, avoiding the situation where, in the case that the first POD has been deleted, a POD associated with the first POD and with no running service still exists on the computing node and has not been deleted, occupying the resources of the computing node for a long time, thus causing a waste of resources.

In one possible implementation of the first aspect, an operating system of the computing node is a linux operating system, the resource adjustment instruction is specifically configured to direct the computing node to allocate the resources of the second POD to the first POD via a Control group interface of the linux operating system. The method provided in the present application can allocate the resources of the second POD to the first POD, achieving rapid resource allocation by simply modifying configuration files of the first POD and the second POD via the Control group interface of the linux operating system. During the allocation process, there is no need to delete or recreate the first POD, thereby avoiding an interruption to a service running in the first POD.

In one possible implementation of the first aspect, when the resource configuration request is specifically configured to request that resources for the expansion of the first POD be target resources, resources configured for the second POD comprises the target resources. The method provided in this application enable the resources configured by the second POD to meet a requirement for resource expansion of the first POD by configuring the target resources for the second POD, avoiding a resource expansion failure of the first POD due to an insufficient resource quantity configured for the second POD.

In one possible implementation of the first aspect, the target resources include hardware resources, software resources, or network resources. When the target resources configured for the second POD are hardware resources and/or software resources, the resource adjustment instruction is specifically configured to direct the computing node to allocate the target resources to the first POD. When the target resources configured for the second POD are network resources, the resource adjustment instruction is specifically configured to direct the computing node to share the target resources with the first POD. The method provided in this application achieves flexible allocation of the target resources and thus improves efficiency in resource configuration by classifying resources and adopting different allocation methods for different types of resources.

In one possible implementation of the first aspect, the management node is configured with a control apparatus and a K8S control end, and the computing node is configured with a K8S node end. The management node receives the resource configuration request via the control apparatus, directs the control end to create a second POD at the node end via the control apparatus, and associates the first POD with the second POD. The method provided in the present application receives the resource configuration request by arranging the control apparatus. The control apparatus, based on the resource configuration request, directs the K8S control end to create the second POD on the K8S node end, thereby achieving the resource configuration of the first POD. During the resource configuration process, no modification is made to a fundamental K8S program. The control apparatus is configured to direct the K8S control end to complete the operation, avoiding problems of difficult maintenance and poor compatibility on K8S caused by intrusive modifications to K8S.

In a second aspect, a server cluster is provided, where the cluster includes a management node and a computing node and one or a plurality of management unit (PODs) are arranged on the computing node; the management node is configured to receive a resource configuration request, where the resource configuration request is configured to request expansion of resources of a first POD and the first POD is any POD arranged on the computing node; based on the resource configuration request, the management node creates a second POD on the computing node and associate the first POD with the second POD; the management node sends a resource adjustment instruction to the computing node, where the resource adjustment instruction is configured to direct allocation of at least partial resources of the second POD to the first POD; and in response to the resource adjustment instruction, the computing node allocates the at least partial resources of the second POD to the first POD.

In one possible implementation of the second aspect, the resource configuration request includes information about the target resources requested for the expansion of the first POD.

The management node is configured to generate a POD creation instruction according to the resource configuration request, and the POD creation instruction carries the resource information. The management node is also configured to send the POD creation instruction to the computing node. The computing node is configured to determine the target resources from resources of the computing node according to the resource information carried in the POD creation instruction, and to create the second POD according to the determined target resources.

In a third aspect, a server node is provided, where the server node includes a processor and a memory, and the processor is connected to the memory. The memory is configured to store a computer-executable instruction, and the processor is configured to execute the computer-executable instruction stored in the memory, thereby implementing any method provided in the first aspect.

In a fourth aspect, a resource configuration apparatus is provided, applicable to a management node of a server cluster. The server cluster also includes a computing node where one or a plurality of management units (PODs) are arranged. The aforesaid apparatus includes: a receiving module configured to receive a resource configuration request where the resource configuration request is configured to request expansion of resources of a first POD and the first POD is any POD arranged on the computing node; a processing module configured to direct the management node to create a second POD on the computing node and associating the first POD with the second POD based on the resource configuration request; and a sending module configured to send a resource adjustment instruction to the computing node, where the resource adjustment instruction is configured to direct that at least partial resources of the second POD be allocated to the first POD.

In a possible implementation of the fourth aspect, the resource configuration request is resource information about target resources for the expansion of the first POD; the processing module is also configured to generate a POD creation instruction based on the target resources requested for the expansion of the first POD, and the sending module is also configured to send the POD creation instruction to the computing node, where the POD creation instruction is configured to direct that, based on the resource information carried by the POD creation instruction, target resources be determined among resources of the computing node and a second POD be created according to the determined target resources.

In a fifth aspect, a resource configuration apparatus is provided, applicable to a computing node in a server cluster. The server cluster also includes a management node. One or a plurality of management units (PODs) are arranged on the computing node. The aforementioned apparatus includes: a receiving module configured to receive a resource adjustment instruction sent by the computing node; and a processing module configured to allocate at least partial resources of a second POD to a first POD.

In one possible implementation of the fifth aspect, the receiving module is also configured to receive the POD creation instruction sent by the computing node; the processing module is also configured to determine target resources among resources of the computing node based on resource information carried in the POD creation instruction, and to create the second POD according to the determined target resources.

In a sixth aspect, a chip is provided, where the chip includes a processor and an interface circuit, the interface circuit is configured to receive an instruction code and transmit the instruction code to the processor, and the processor is configured to run the instruction code to perform any method provided in the first aspect.

In a seventh aspect, a computer-readable storage medium is provided, storing a computer-executable instruction. When running on a computer, the computer-executable instruction enables the computer to execute any method provided in the first aspect.

In an eighth aspect, a computer program product is provided, including a computer-executable instruction. When running on a computer, the computer-executable instruction enables the computer to execute any method provided in the first aspect.

For technical effects brought by any one of the design manners in the second aspect to the eighth aspect, reference may be made to technical effects brought by different implementations in the first aspect, and details are not repeated here.

### BRIEF DESCRIPTION OF DRAWINGS

FIG. 1 is a schematic diagram illustrating a structure of a K8s system;
FIG. 2 is a schematic diagram illustrating another structure of the K8s system;
FIG. 3 is a system architecture diagram of a server cluster provided in embodiments of the present application;
FIG. 4 is a structural block diagram of a server node provided in the embodiments of the present application;
FIG. 5 is a flowchart illustrating a resource configuration method provided in the embodiments of the present application;
FIG. 6 is a flowchart illustrating another resource configuration method provided in the embodiments of the present application;
FIG. 7 is another system architecture diagram of a server cluster provided in the embodiments of the present application; and
FIG. 8 is a flowchart illustrating another resource configuration method provided in the embodiments of the present application.

### DESCRIPTION OF EMBODIMENTS

The following describes technical solutions in embodiments of the present application with reference to the accompanying drawings in the embodiments of this application. In the descriptions of the present application, unless otherwise stated, "a plurality of" represents two or more. "At least one of the following items" or a similar expression thereof refers to any combination of these items, including any combination of a single item or a plurality of items. For example, at least one of a, b, or c may represent a, b, c, a and b, a and c, b and c, or a, b, and c, where each of a, b, and c may be singular or plural.

In addition, to clearly describe the technical solutions in the embodiments of the present application, in the embodiments of the present application, words such as "first", "second" and the like are used to differentiate between identical or similar items that have basically the same functions and purposes. A person skilled in the art will understand that words like "first" or "second" do not limit a quantity or an execution order, and words such as "first" and "second" do not mean being definitely different. Besides, in the embodiments of the present application, words such as "exemplary" or "for example" are used to indicate an example, an illustration, or a description. Any embodiment or design described as "exemplary" or "for example" in the embodiments of the present application should not be construed as being more preferred or advantageous over other embodiments or designs. Rather, the use of the words "exemplary" or "for example" is intended to present related concepts in a specific manner for ease of understanding.

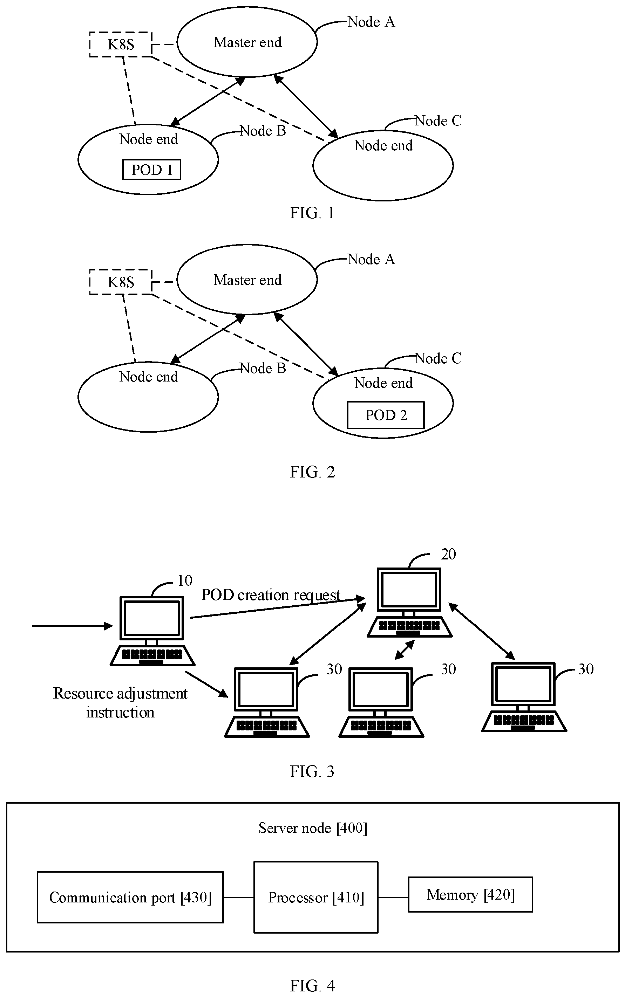

As shown in FIG. 1, which is a schematic diagram illustrating a structure of a K8s system, the system includes a node A, a node B, and a node C. The node A is a management node running a K8s master end. The node B and the node C are computing nodes running the K8s node end, and each node can be configured with a POD, for example, the node B is configured with a POD 1.

In the process of using Kubernetes, a user needs to reconfigure resources of a created POD (such as the POD 1) based on a service requirement. For example, references can be made to FIG. 2 together with FIG. 1. When the user needs to reconfigure the number of resources for the POD 1, the user can delete the POD 1 arranged on the node B, create a POD 2 on the node C based on a latest resource requirement of a service, and re-run a service that was running in the POD 1 in the newly created POD 2. However, this process will result in an interruption to the service running in the POD 1, affecting user experience.

In view of this, the embodiments of the present application provide a resource configuration method applicable to a server cluster. The server cluster includes the management node and the computing node, where one or a plurality of management units (PODs) are arranged on the computing node. When the management node receives the user's request for expansion of the resources of a first POD, the method provided in the present application creates a second POD on the computing node where the first POD is arranged, and allocates the resources of the second POD to the first POD, enabling dynamic expansion of the resources of the first POD. Consequently, during the resource expansion process, there is no need to delete or recreate the first POD, which can avoid the interruption to the service running in the first POD and enhance the user experience.

The following provides an illustrative explanation of the application scenarios of the resource configuration method provided in the embodiments of the present application.

FIG. 3 is a schematic diagram illustrating a system architecture for a resource configuration system provided in the embodiments of the present application. As shown in FIG. 3, the system architecture includes at least one control apparatus 10, a management node 20, and a plurality of computing nodes 30. In this case, the control apparatus 10 communicates with the management node 20 and the computing nodes 30 respectively. In an example, the control apparatus 10 communicates with the management node 20 and the computing nodes 30 respectively via a switch.

The control apparatus 10 can be arranged on the management node 20 or a computing node 30 or independently arranged on a node or a device other than the management node 20 and the computing nodes 30. The control apparatus 10, the management node 20, and the plurality of computing nodes 30 are respectively configured to perform the corresponding steps, as described below.

For instance, in the case that the control apparatus 10 is arranged on an independent node/device, the control apparatus 10, the management node 20, and the plurality of computing nodes 30 can be any server nodes with computation capabilities, such as general-purpose computers or servers, etc. There is no specific restriction on the implementation of the control apparatus 10, the management node 20, and the plurality of computing nodes 30.

The management node 20 provided in the embodiments of the present application is configured with the K8S master end. Based on K8S, the management node 20 can manage one or a plurality of PODs arranged on the computing node 30, for example, deleting a POD arranged on the computing node 30 or creating the POD on the computing node 30.

The computing node 30 is configured with the K8S node end, and one or the plurality of PODs are arranged on the computing node 30. Each POD is configured with different resources to run different services, thereby providing different types of service to users. Based on K8S, the computing node 30 can keep one or the plurality of PODs working normally.

It is understandable that the system architecture provided in FIG. 3, as well as a function implemented by each execution body within the architecture, is merely an exemplary implementation in the embodiments of the present application. The system architecture in the embodiments of the present application and the function implemented by each execution body include, but are not limited to, the above descriptions.

FIG. 4 is a structural block diagram of a server node provided in the embodiments of the present application. A server node 400 may be the control apparatus 10, the management node 20, or the computing node 30 such that the functions of the control apparatus 10, the management node 20, or the computing node 30 may be achieved via the structure of the server node 400 in FIG. 4. The server node includes at least one processor 410, at least one memory 420, and at least one communication port 430.

The processor 410 may include one or a plurality of processor cores. The processor 410 connects all parts within a terminal through various interfaces and circuits, executes various functions and processes data of the server node by running or executing an instruction, a program, a code set, or an instruction set stored in the memory 420, and invoking data stored in the memory 420. Optionally, the processor 410 may be implemented in at least one of the hardware forms of digital signal processing (digital signal processing, DSP), field-programmable gate array (field-programmable gate array, FPGA), and programmable logic array (programmable logic array, PLA). The processor 410 may integrate one or a combination of a Central Processing Unit (Central Processing Unit, CPU), a graphics processing unit (graphics processing unit, GPU), and a modem. It is understandable that the modem may also be implemented separately via a communication chip rather than being integrated into the processor 410.

The memory 420 may include random access memory (random access memory, RAM) and/or read-only memory (read-only memory, ROM). Optionally, the memory 420 includes a non-transitory computer-readable storage medium. The memory 420 is configured to store an instruction, a program, code, a code set, or an instruction set. The memory 420 can include a program storage area. The program storage area is configured to store an instruction for implementing an operating system, an instruction for implementing at least one function (such as a touch function, an audio playback function, an image playback function, etc.), and instructions for implementing the various method embodiments mentioned above, and the like.

The communication port 430 is configured to communicate with other equipment or communication networks, such as Ethernet, Radio Access Network (RAN), wireless local area networks (wireless local area networks, WLAN), etc.

When the server node 400 shown in FIG. 4 is the control apparatus 10, the processor 410 executes the method provided in the embodiments of the present application by executing the program code in the memory 420.

Besides, the person skilled in the art can understand that the structure of the server node shown in the aforementioned figures does not constitute a limitation on the server node. The server node can include more or fewer components than shown, combine certain components, or have different arrangements of components. The details will not be repeated here.

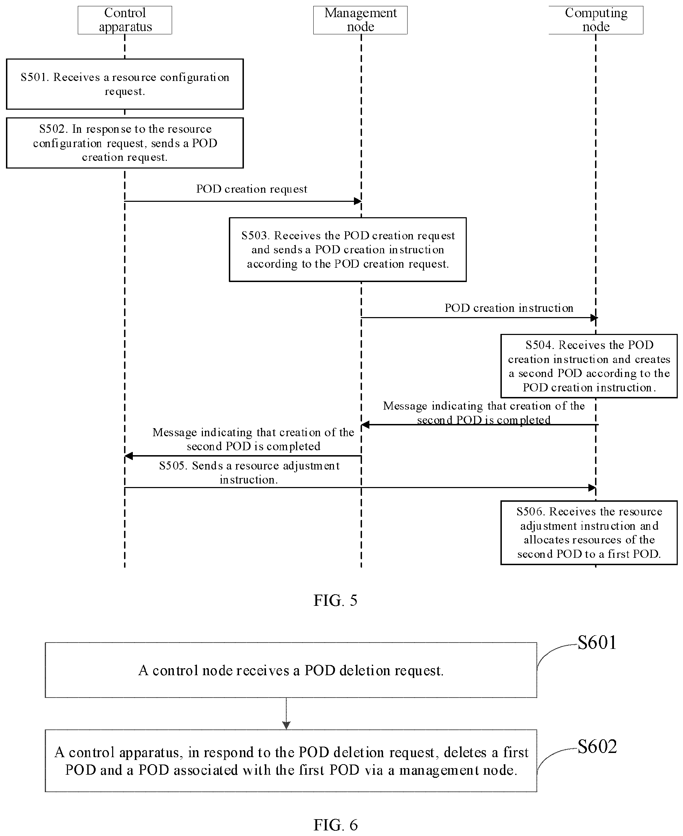

A scenario where the control apparatus 10 is arranged on a node independent of the management node and the computing node is used as an example, as shown in FIG. 5. FIG. 5 is a flowchart illustrating the resource configuration method provided in the embodiments of the present application. The following, together with FIG. 3, describes the resource configuration method in the embodiments of the present application in detail from the perspective of the interaction between the control apparatus 10, the management node 20, and the computing node 30. The method includes the following steps.

S501. The control apparatus receives a resource configuration request.

The resource configuration request is configured to request the expansion of the resources configured for the first POD. The resource configuration request includes an identifier and target resources of the first POD, where the target resources are the resources requested by the user for the expansion of the first POD. The first POD is any POD arranged on any computing node shown in FIG. 1 or FIG. 2.

The requested target resources can be hardware resources, software resources, or network resources. Specifically, the hardware resources can refer to the resources of hardware devices arranged on the computing node, such as computing resources or memory resources. The software resources can refer to resources arranged on software devices or block devices on the computing node, such as resources of a virtual machine.

An example that the target resources are hardware resources is used here: the requested target resources are 4 GB memory resources. That is, on top of the 4 GB memory resources already configured for the first POD, the memory resources are increased from 4 GB to 8 GB.

Optionally, the resource configuration request is entered by the user through the input/output interface of the control apparatus (such as a touch screen, a mouse, a keyboard, etc.) or received from a device of the user, and no limitation is specifically imposed here.

S502. The control apparatus, in response to the resource configuration request, sends a POD creation request to the management node.

Specifically, the control apparatus generates the POD creation request based on the identifier and the target resources of the first POD in the resource configuration request, and sends the POD creation request to the management node, where the POD creation request includes the identifier of the first POD and the target resources.

For example, when the resource configuration request includes the identifier of the first POD, that is POD 1, and the requested target resources, that is the 4 GB memory resources, the computing node first generates the POD creation request based on the POD 1 and the 4 GB memory resources, and then sends the POD creation request to the management node.

S503. The management node receives the POD creation request and, based on the POD creation request, sends a POD creation instruction to the computing node with the first POD.

Specifically, the management node determines the computing node where the first POD is to be arranged based on the identifier of the first POD in the resource configuration request. For example, the management node can determine the computing node according to an association between the corresponding computing node and the identifier of the first POD. The association, which was generated when the first POD was created, is stored on the management node. Then, the computing node generates the POD creation instruction according to the target resources in the POD creation request, and sends the POD creation instruction to the computing node where the first POD is arranged. The POD creation instruction is used to direct the computing node where the first POD is arranged to create the second POD, is the second POD is configured with at least the target resource. In one example, when the resource configuration request specifically requests expansion of the memory resources of the POD 1 from 4 GB to 8 GB, the POD 1 is arranged on the node B. The POD creation instruction is configured to direct the node B to create the POD 2, and the second POD 2 includes 4 GB memory resources to meet the resource expansion requirement of the POD 1.

It should be noted that the second POD also includes resources for maintaining its own operation.

In this way, the method provided in this application configures the target resources for the second POD so that the resources configured by the second POD can meet the resource expansion requirement of the first POD, avoiding a resource expansion failure of the first POD due to an insufficient resource quantity configured for the second POD.

S504. The computing node where the first POD is arranged receives the POD creation instruction and creates the second POD according to the POD creation instruction.

Specifically, the computing node where the first POD is arranged determines the target resources among its own resources according to the target resources in the POD creation instruction, and creates the second POD based on the determined target resources. The second POD is configured with at least the target resources.

S505. The control apparatus sends a resource adjustment instruction to the computing node.

In one possible implementation, the S505 includes: after receiving a message indicating that creation of the second POD is completed, the control apparatus sends the resource adjustment instruction to the computing node.

Specifically, the message indicating that the creation of the second POD is completed can be sent by the computing node to the management node after the second POD has been created. The management node, after receiving the message, sends it to the control apparatus. The message indicating that the creation of the second POD is completed can also be sent directly by the computing node to the control apparatus. There is no specific limitation on the exact method for sending the message that the creation of the second POD is completed.

By sending the message that the second POD has been created to the control device by the management node or the computing node after the second POD is created, the control device can send the resource scheduling instruction to the computing node only when the second POD has been created. This avoids a situation where the control apparatus directs the computing node to allocate the resources of the second POD to the first POD using the resource adjustment instruction before the creation of the second POD in the computing node is completed, which makes the computing node fail to allocate the resources to the first POD, resulting in a resource configuration failure and affecting the user experience.

S506. The computing node where the first POD is arranged receives the resource adjustment instruction and allocates resources of the second POD to the first POD.

In one possible implementation, an operating system of the computing node is a linux operating system. When receiving the resource adjustment instruction sent by the control apparatus, the computing node allocates the resources of the second POD to the first POD over a Control group interface of the linux operating system.

Specifically, the computing node modifies the configuration files of the first POD and the second POD via the Control group interface to achieve allocation of resources of the second POD to the first POD.

An example is provided, where the resource configuration request is specifically configured to request the expansion of the memory resources of the first POD from 4 GB to 8 GB, the memory resources configured for the first POD are 4 GB, and the memory resources configured for the second POD are 4 GB + 20 MB. The computing node modifies a configuration file of the first POD via the Control group interface, changing a memory parameter in the configuration file of the first POD from 4 GB to 8 GB. The computing node also modifies a configuration file of the second POD via the Control group interface, changing a memory parameter in the configuration file of the second POD from 4 GB + 20 to 20 MB, to achieve the allocation of the resources of the second POD to the first POD.

The method provided in the present application can allocate the resources of the second POD to the first POD, achieving rapid resource allocation by simply modifying configuration files of the first POD and the second POD via the Control group interface of the linux operating system. During the allocation process, there is no need to delete or recreate the first POD, thereby avoiding the interruption to the service running in the first POD.

In one possible implementation, the S506 specifically includes:

When the target resources requested by the first POD are the hardware resources and/or the software resources, the computing node receives the resource adjustment instruction and allocates the hardware resources and/or software resources configured for the second POD to the first POD.

Specifically, the hardware resources can refer to the resources of the hardware devices arranged on the computing node, such as computing resources or memory resources. The software resources can refer to the resources arranged on software devices or block devices on the computing node, such as the resources of the virtual machine.

When the target resources requested by the first POD are network resources and the resources configured for the second POD are network resources, the computing node receives the resource adjustment instruction and allocates the network resources configured for the second POD to the first POD.

The method provided in this application achieves flexible allocation of the target resources and thus improves efficiency in resource configuration by classifying resources and adopting different allocation methods for different types of resources.

From the S501 to the S506, it can be noted that when receives the user's request for the expansion of the resources of the first POD, the method provided in the present application enables the dynamic expansion of the resources of the first POD by creating the second POD on the computing node where the first POD is arranged and allocating the resources of the second POD to the first POD. Consequently, during the resource expansion process, there is no need to delete or recreate the first POD, which can avoid the interruption to the service running in the first POD and enhance the user experience. At the same time, the method provided by the present application directs the K8S master end to create the second POD on the K8S node end via the POD creation request. No modification is made to a fundamental K8S program. The control apparatus is configured to direct the K8S control end to complete the operation, avoiding problems of difficult maintenance and poor compatibility on K8S caused by intrusive modifications to K8S.

In a possible implementation, the POD creation instruction is also configured to direct the management node and associate the first POD with the second POD.

In one example, the second POD is determined as an associated POD of the first POD, including determining the first POD as the owner POD of the second POD.

Specifically, determining the first POD as the owner POD of the second POD means establishing subordination of the second POD to the first POD. Based on a feature of K8S, when the user deletes the owner POD of a POD, K8S simultaneously deletes both the POD and the owner POD.

The method provided in the present application associates the first POD with the second POD, facilitating management of the plurality of PODs within the computing node. For example, when there is a need to delete the POD corresponding to any service, it is only needed to delete the owner POD of the service. Based on the feature of K8S, all the PODs subordinating to the owner POD can be deleted. In this way, it is avoided that a waste of resources that would result from the case that the POD corresponding to the service is not deleted from the computing node.

In one possible implementation, as shown in FIG. 6, the method further includes the following steps.

S601. The control apparatus receives a POD deletion request.

The POD deletion request is configured to request deletion of the first POD.

S602. The control apparatus responds to the POD deletion request by deleting the first POD and any POD associated with the first POD via the management node.

Specifically, in response to the POD deletion request, the control apparatus sends a POD deletion instruction to the management node. The management node determines the PODs associated with the first POD based on the POD deletion instruction. Then, the management node deletes the first POD along with all the PODs associated with the first POD.

For instance, based on the feature of K8S, when the master end runs on the management node receives a POD deletion instruction sent by the control apparatus, this POD deletion instruction is configured to delete the first POD. The master end first determines whether the first POD is the owner POD of other PODs. In the case where the first POD is the owner POD of other PODs, the master end deletes the first POD, as well as all the PODs whose owner POD is the first POD. In the case that the first POD is not the owner POD of other PODs, only the first POD is deleted.

The method provided in the present application, when receiving the user's request for deletion of the first POD, deletes all the PODs associated with the first POD. This avoids a situation where, in the case that the first POD has been deleted, a POD associated with the first POD and with no running service, for example, the second POD, still exists on the computing node, causing the waste of resources.

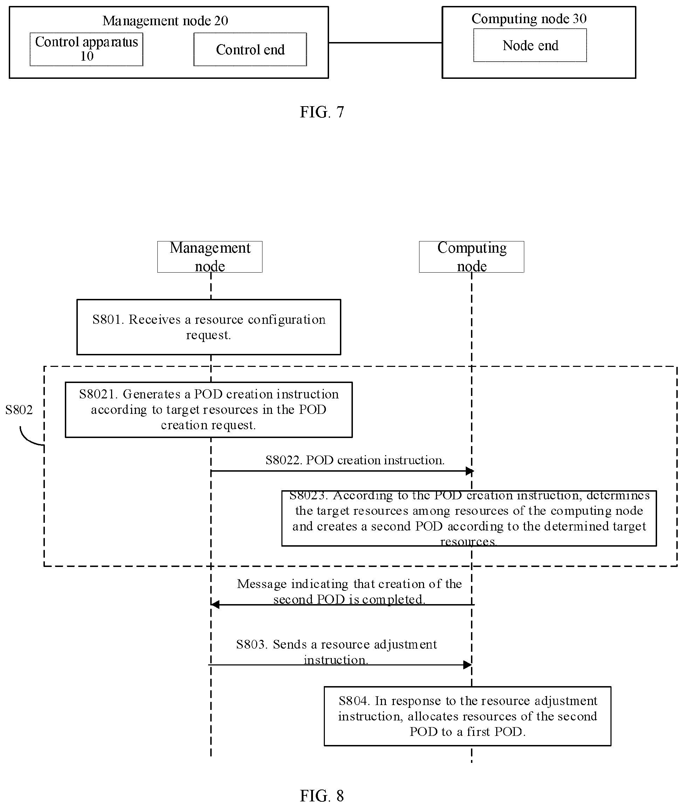

In another possible implementation, references can be made to FIG. 7. FIG. 7 is a schematic diagram illustrating another system architecture for the resource configuration system provided in the embodiments of the present application. As shown in FIG. 7, on the basis of the system architecture shown in FIG. 3, the control apparatus 10 is arranged on the management node 20. The management node 20 is configured with the K8S control (master) end. Based on K8S, the management node 20 can manage one or the plurality of PODs arranged on the computing node 30, for example, deleting the POD arranged on the computing node 30 or creating the POD on the computing node 30. The computing node 30 is configured with the K8S node end.

A scenario where the control apparatus 10 is arranged on the management node 20 is used as an example, as shown in FIG. 8. FIG. 8 is a flowchart illustrating the resource configuration method provided in the embodiments of the present application. The following, together with FIG. 7, describes the resource allocation method in the embodiments of the present application in detail from the perspective of the interaction between the management node 20 and the computing node 30. The method includes the following steps.

S801. The management node receives the resource configuration request.

For details on the implementation and the explanation of receiving the resource configuration request, references can be made to the S501. The details will not be repeated here.

S802. Based on the resource configuration request, the management node creates the second POD on the computing node.

In one possible implementation, the S802 specifically includes the following steps.

S8021. The management node generates the POD creation instruction based on the resource configuration request.

Specifically, the resource configuration request includes the information about the target resources requested for the expansion of the first POD. The control apparatus in the management node generates the POD creation request based on the resource configuration request, and the control apparatus sends the POD creation request to the control end of K8S on the management node. The K8S control end generates the POD creation instruction based on the POD creation request. The POD creation instruction carries resource information of the target resources.

In one possible implementation, when the management node communicates with a plurality of computing nodes, the resource configuration request also includes the identifier of the first POD.

Specifically, the control apparatus on the management node generates the POD creation request based on the identifier of the first POD and the resource information of the target resources in the resource configuration request. Then, the control apparatus sends the POD creation request to the control end of K8S on the management node. The POD creation request includes the resource information of the target resources and the identifier of the first POD. The K8S control end determines the computing node where the first POD is arranged based on the identifier of the first POD, and then generates the POD creation instruction according to the resource information.

S8022. The management node sends the POD creation instruction to the computing node.

S8023. The computing node determines the target resources among the resources of the computing node according to the POD creation instruction, and creates the second POD according to the target resources.

In one possible implementation, after the second POD is created on the computing node, the management node associates the first POD with the second POD.

S803. The management node sends the resource adjustment instruction to the computing node.

For details about the implementation and the explanation of the S803, references can be made to the S505. The details will not be repeated here.

S804. In response to the resource adjustment instruction, the computing node allocates the resources of the second POD to the first POD.

For details about the implementation and the explanation of the S804, references can be made to the S506. The details will not be repeated here.

From the S801 to the S804, it can be noted that the method provided in the present application achieves the resource configuration of the first POD by receiving the resource configuration request on the management node, and then creating the second POD on the K8S node end according to the resource configuration request via the control end of K8S. During the resource configuration process, no modification is made to the fundamental K8S program. The control apparatus is configured to direct the K8S control end to complete the operation, preventing problems of difficult maintenance and poor compatibility on K8S caused by intrusive modifications to K8S.

From the S801 to the S804, it can be noted that the method provided in this application sets a control apparatus on the management node, the control apparatus receives the resource configuration request, and the control apparatus instructs the control end of K8S to create the second POD on the node end of K8S according to the resource configuration request, so as to achieve the resource configuration of the first POD. During the resource configuration process, no modification is made to the fundamental K8S program. The control apparatus is configured to direct the K8S control end to complete the operation, preventing problems of difficult maintenance and poor compatibility on K8S caused by intrusive modifications to K8S.

The solutions provided in the embodiments of the present application are described above from the perspective of methodology. It is understandable that, to achieve the aforementioned functions, the control apparatus includes at least one of a hardware structure and/or a software module for performing each function. It should be readily apparent to the person skilled in the art that the units and algorithm steps of the various examples described with the embodiments disclosed herein can be implemented by hardware, or a combination of hardware and computer software. Whether a particular function is executed by hardware or in software driving the hardware depends on a specific application and design constraints of the technical solutions. A skilled artisan can use different methods for each specific application to implement the described functions, but such an implementation should not be considered beyond the scope of the present application. The embodiments of the present application provide a resource configuration apparatus, applicable to the management node of the server cluster. The server cluster also includes the computing node where one or a plurality of management units (PODs) are arranged. The apparatus includes: a receiving module configured to receive the resource configuration request where the resource configuration request is configured to request the expansion of the resources of the first POD and the first POD is any POD arranged on the computing node; a processing module configured to direct the management node to create a second POD on the computing node based on the resource configuration request and associating the first POD with the second POD; and a sending module configured to send a resource adjustment instruction to the computing node, where the resource adjustment instruction is configured to direct that at least partial resources of the second POD be allocated to the first POD.

Optionally, the resource configuration request includes the resource information about the target resources for the expansion of the first POD. The processing module is also configured to generate the POD creation instruction according to the resource information. The POD creation instruction carries the resource information. The sending module is also configured to send the POD creation instruction to the computing node. The POD creation instruction is configured to direct that, based on the resource information, target resources are determined among resources of the computing node and the second POD be created according to the determined target resources.

The embodiments of the present application provide a resource configuration apparatus, applicable to the computing node in the server cluster. The server cluster also includes the management node. One or the plurality of management units (PODs) are arranged on the computing node. The apparatus includes: a receiving module configured to receive the resource adjustment instruction sent by the computing node; and a processing module configured to allocate at least partial resources of the second POD to the first POD.

Optionally, the receiving module is also configured to receive the POD creation instruction sent by the computing node. The processing module is also configured to determine the target resources among the resources of the computing node based on the POD creation instruction, and to create the second POD according to the determined target resources. The embodiments of the present application also provide a computer-readable storage medium that stores at least one computer instruction. The at least one computer instruction is loaded and executed by the processor to implement each resource configuration method described in the aforementioned embodiments. For the explanation of relevant content in and a description of a beneficial effect of any of the computer-readable storage media provided above, reference can be made to the corresponding aforementioned embodiments. The details will not be repeated here.

The embodiments of the present application also provide a chip. The chip integrates a control circuit and one or a plurality of ports for implementing the functions of the control apparatus. Optionally, for the functions supported by the chip, references can be made to the descriptions above. The details will not be repeated here. The person skilled in the art can understand that all or part of the steps in the aforementioned embodiments can be accomplished by a program directing relevant hardware. The program can be stored in the computer-readable storage medium. The storage medium can be ROM, RAM, etc. The processing unit or processor may be a CPU, a general-purpose processor, an application specific integrated circuit (application specific integrated circuit, ASIC), a digital signal processor (digital signal processor, DSP), a field programmable gate array (field programmable gate array, FPGA), or other programmable logic devices, transistor logic devices, hardware components, or any combination of them.

The embodiments of the present application also provide a computer program product including an instruction. When running on a computer, the instruction enables the computer to perform any method in the aforementioned embodiments. The computer program product includes one or a plurality of computer instructions. When the computer program instruction is loaded and executed on the computer, the processes or functions in the embodiments of the present application are generated in whole or in part. The computer may be a general-purpose computer, a special-purpose computer, a computer network, or other programmable device. The computer instruction may be stored in the computer-readable storage medium or transmitted from one computer-readable storage medium to another computer-readable storage medium. For example, the computer instruction may be transmitted from a website, computer, server, or data center to another website, computer, server, or data center via wired means (such as a coaxial line, an optical fiber, or a digital subscriber line [digital subscriber line, DSL]), or via wireless means (such as infrared, radio, microwave, etc.). The computer-readable storage medium may be any available medium accessible to the computer, or a data storage device integrating one or a plurality of available media, such as a server or a data center. The available medium may be a magnetic medium (such as a floppy drive, a drive, or a tape), an optical medium (such as a digital video disc [DVD]), or a semiconductor medium (such as a solid state drive [SSD]).

It should be noted that the components provided in the embodiments of the present application for storing the computer instruction or the computer program, such as, but not limited to, the memory, the computer-readable storage medium, and the communication chip, are all non-transitory. The person skilled in the art should appreciate that, in one or a plurality of the examples described above, the functions described in the embodiments of the present application can be implemented by the hardware, the software, firmware, or any combination of them. When implemented by software, these functions can be stored in the computer-readable storage medium or transmitted as one or the plurality of instructions or the code on the computer-readable storage medium. The computer-readable storage medium includes a computer storage medium and a communication medium, where the communication medium includes any medium that facilitates transmission of the computer program from one place to another. The storage medium can be any available medium accessible via a general-purpose or special-purpose computer.

The above are merely optional embodiments of the present application. The scope of protection of the present application is not limited thereto. Any modification, equivalent substitution, or improvement made within the spirit and principles of the present application should be covered within the scope of protection of the present application.

## Claims

1. A resource configuration method **characterized in that** the resource configuration method is applied to a server cluster, the server cluster comprises a management node and a computing node, one or a plurality of management units (PODs) are arranged on the computing node, and the method comprises:
receiving, by the management node, a resource configuration request, the resource configuration request is configured to request expansion of resources of a first POD and the first POD is any POD arranged on the computing node;
based on the resource configuration request, creating a second POD on the computing node and associating the first POD with the second POD by the management node;
sending, by the management node, a resource adjustment instruction to the computing node, the resource adjustment instruction is configured to direct allocation of at least partial resources of the second POD to the first POD; and
in response to the resource adjustment instruction, allocating, by the computing node, the at least partial resources of the second POD to the first POD.

2. The method according claim 1, **characterized in that** the management node sends the resource adjustment instruction to the computing node, comprising:
after receiving a message sent by the computing node indicating that creation of the second POD is completed, sending the resource adjustment instruction to the computing node.

3. The method according to claim 1 or 2, **characterized in that** the method further comprising:
receiving, by the management node, a POD deletion request, the POD deletion request is configured to request deletion of the first POD; and
in response to the POD deletion request, deleting the first POD and any POD associated with the first POD via the management node.

4. The method according to any of claims 1 to 3, **characterized in that** an operating system of the computing node is a linux operating system, and the resource adjustment instruction is specifically configured to direct the computing node to allocate the resources of the second POD to the first POD via a Control group interface of the linux operating system.

5. The method according to any one of claims 1 to 4, **characterized in that** when the resource configuration request is specifically configured to request that resources for the expansion of the first POD be target resources, resources configured for the second POD comprises the target resources.

6. The method according to claim 5, **characterized in that** the target resources comprise hardware resources, software resources, or network resources,
when the target resources configured for the second POD are hardware resources and/or software resources, the resource adjustment instruction is specifically configured to direct the computing node to allocate the target resources to the first POD; and
when the target resources configured for the second POD are network resources, the resource adjustment instruction is specifically used to direct the computing node to share the target resources with the first POD.

7. The method according to any one of claims 1 to 6, **characterized in that** the management node is configured with a control apparatus and a K8S control end, and the computing node is configured with a K8S node end; and
the management node receives the resource configuration request via the control apparatus, directs the control end to create a second POD at the node end via the control apparatus, and associates the first POD with the second POD.

8. A server cluster, **characterized in that** the server cluster comprises a management node and a computing node and one or a plurality of management unit (PODs) are arranged on the computing node;
the management node is configured to receive a resource configuration request, the resource configuration request is configured to request expansion of resources of a first POD and the first POD is any POD arranged on the computing node;
based on the resource configuration request, the management node creates a second POD on the computing node and associate the first POD with the second POD;
the management node sends a resource adjustment instruction to the computing node, the resource adjustment instruction is configured to direct allocation of at least partial resources of the second POD to the first POD; and
in response to the resource adjustment instruction, the computing node allocates the at least partial resources of the second POD to the first POD.

9. The server cluster according to claim 8, **characterized in that** the resource configuration request comprises information about target resources requested for the expansion of the first POD;
the management node is configured to generate a POD creation instruction according to the resource configuration request, and the POD creation instruction carries the resource information;
the management node is also configured to send the POD creation instruction to the computing node; and
the computing node is configured to determine the target resources from resources of the computing node according to the resource information carried in the POD creation instruction, and to create the second POD according to the determined target resources.

10. A server node, **characterized in that** the server node comprises a processor and a memory, the processor is connected to the memory, the memory is configured to store a computer-executable instruction, and the processor is configured to execute the computer-executable instruction stored in the memory, thereby implementing a method claimed in any one of claims 1 to 7.
